## Europäisches Patentamt

## European Patent Office

## Office européen des brevets

(11) Veröffentlichungsnummer: **0 226 802 B1**

# EUROPÄISCHE PATENTSCHRIFT

(45) Veröffentlichungstag der Patentschrift: **27.03.91**

(51) Int. Cl.5: **H04N 11/08**

(21) Anmeldenummer: **86115770.9**

(22) Anmeldetag: **13.11.86**

(54) System zur Übertragung von Fernsehinformationen.

(30) Priorität: **20.12.85 DE 3545322**

(43) Veröffentlichungstag der Anmeldung:
**01.07.87 Patentblatt 87/27**

(45) Bekanntmachung des Hinweises auf die
Patenterteilung:
**27.03.91 Patentblatt 91/13**

(84) Benannte Vertragsstaaten:
**DE FR GB NL**

(56) Entgegenhaltungen:
DE-A- 3 424 033
FR-A- 2 343 384

**FERNSEH- UND KINO-TECHNIK, 39. Jahrgang,
Nr. 10, 1985, Heidelberg ULRICH MESSER-
SCHMID "Fernsehnormen für Rundfunksatelliten" Seiten 472-480**

**FUNK-TECHNIK 39, Heft 9, 1984, München,
Heidelberg "C-MAC oder D2-MAC oder E-
MAC beim Satelliten-Fernsehen?" Seiten
362-364**

(73) Patentinhaber: **ROBERT BOSCH GMBH
Postfach 50
W-7000 Stuttgart 1(DE)**

(72) Erfinder: **Bolle, Günter, Dr. Dipl.-Ing.
Ringstrasse 42
W-3201 Diekholzen(DE)**
Erfinder: **Brägas, Peter
Hausbergring 49
W-3200 Hildesheim(DE)**
Erfinder: **Vollmer, Rudolph, Dr.-Ing.
Steinbergstrasse 69
W-3200 Hildesheim(DE)**

**Beschreibung**

Gegenstand des Schutzrechts sind Übertragungssysteme für Fernsehinformationen.

Zur Übertragung von Fernsehinformationen sind zahlreiche Verfahren bekannt, welche einerseits auf die jeweils im Einzelfall zu übertragenden Informationen, wie beispielsweise Schwarzweiß-Fernsehen, Farbfernsehen, Begleitton, abgestellt sind und welche andererseits auf die jeweilige Struktur des Nachrichtennetzes (Punkt-Zu-Punkt-Übertragung oder Rundfunksysteme) ausgerichtet sind. Ferner richten sich die Übertragungsverfahren im einzelnen nach den jeweils zur Übertragung zur Verfügung stehenden Medien, wie beispielsweise Kabel-, Funk- oder Glasfaserleitung.

Für die MAC-System-Familie hat man die digitale Übertragung der Ton- und Datensignale untersucht (Fernseh- und Kinotechnik, 39. Jahrgang, Nr. 10/1985, Seite 472 ff).

In der Studiotechnik arbeitet man auch mit Kameras, welche die Farbwertsignale nacheinander digital übertragen (FR-A-2 343 384).

Für die Übertragung von digitalen Fernsehsignalen stellten sich die Erfinder die Aufgabe, die Übertragung des für das gesamte Fernsehbild einschließlich Synchonisier-, Ton- und weiteren Datensignalen erforderlichen Datenstroms innerhalb der vierten PCM-Hierarchiestufe der Deutschen Bundespost zu realisieren.

Lösungen dieser Aufgabe sind in den nebengeordneten Ansprüchen 1 und 2 gekennzeichnet.

Dabei werden die zeitlichen Übertragungsabschnitte der U-, V- und Y-Signale auf Kosten der Zeitabschnitte für die Synchronisation und die Ton- und Zusatzdaten gedehnt.

Durch die in den Unteransprüchen aufgeführten Maßnahmen sind vorteilhafte Weiterbildungen und Verbesserungen der in den nebengeordneten Ansprüchen 1 und 2 angegebenen Systeme möglich.

Ausführungsbeispiele der Erfindung sind in den Zeichnungen anhand mehrerer Figuren dargestellt und in der nachfolgenden Beschreibung näher erläutert. Es zeigt:

Fig. 1    eine schematische Darstellung eines bekannten D2-MAC/Paket-Signals,

Fig. 2    eine schematische Darstellung eines Signalformats gemäß dem erfindungsgemäßen Verfahren,

Fig. 3    ein Blockschaltbild eines Coders zur Umwandlung eines D2-MAC/Paket-Signals in ein Signal gemäß der Erfindung,

Fig. 4    ein Blockschaltbild eines Decoders zur Umwandlung eines Signals gemäß der Erfindung in ein D2-MAC/Paket-Signal,

Fig. 5    ein Blockschaltbild eines Coders zur Umwandlung eines C-MAC/Paket-Signals in ein Signal gemäß der Erfindung,

Fig. 6    ein Blockschaltbild eines Decoders zur Umwandlung eines Signals gemäß der Erfindung in ein C-MAC/Paket-Signal oder ein D-MAC/Paket-Signal und

Fig. 7    ein Blockschaltbild einer Anordnung zum Empfangen eines Signals gemäß der Erfindung.

Gleiche Teile sind in den Figuren mit gleichen Bezugzeichen versehen.

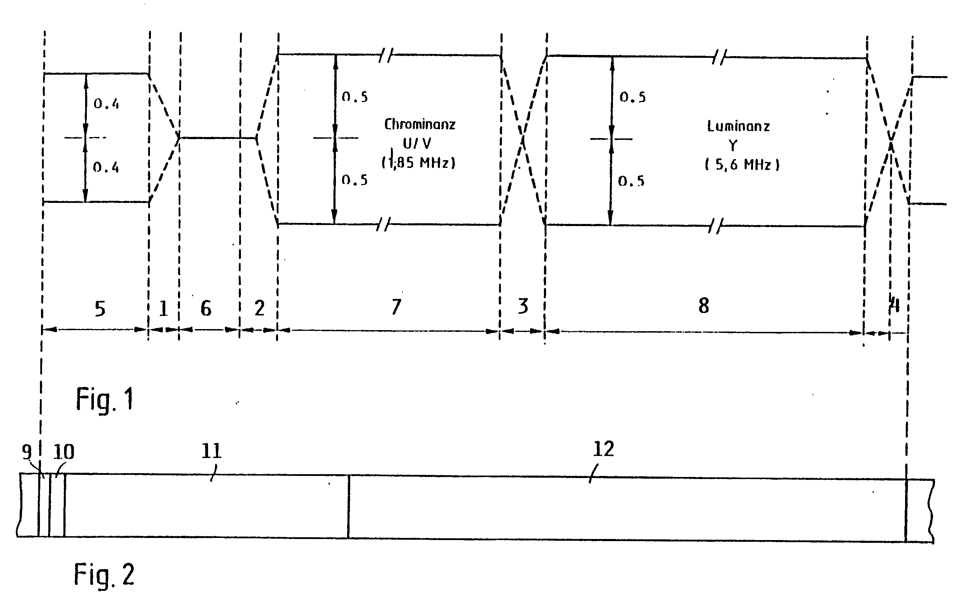

Da ein wesentlicher Vorteil des erfindungsgemäßen Systems die Verträglichkeit mit dem Multiplex-Übertragungsverfahren mit analogen Komponentensignalen (MAC) ist, wird zunächst an Hand von Fig. 1 ein D2-MAC/Paket-Signal erläutert. Dieses Signal ist für zukünftige Satelliten-Fernseh-Rundfunksysteme vorgesehen. Das Diagramm in Fig. 1 zeigt das D2-MAC/Paket-Signal während einer Zeilenperiode. Außer im vorliegenden Zusammenhang nicht näher zu erläuternden Übergangsabschnitten 1 bis 4 weist das Signal innerhalb einer Zeilenperiode vier Abschnitte auf. Im Abschnitt 5 werden duobinär codierte digitale Signale übertragen, welche die Zeilensynchronisierung, Tonkanäle und weitere Daten beinhalten. Während des Abschnitts 6 wird ein analoger Bezugswert übertragen, welcher dem Unbuntwert der Farbdifferenzsignale entspricht. Im Abschnitt 7 folgt die Übertragung der Farbartinformation in Form von zeilenweise abwechselnden komprimierten Farbdifferenzsignalen U bzw. V. Schließlich wird im Abschnitt 8 die komprimierte Leuchtdichteinformation ebenfalls als Analogsignal übertragen. Um in Fig. 1 die kürzeren Zeitabschnitte besser darstellen zu können, wurden die für die Übertragung der Farbartinformation und der Leuchtdichteinformation vorgesehenen Zeitabschnitte gekürzt dargestellt. Neben den Austast-Zeilen, Videotext- und VPS-Zeilen sowie den Textsignal-Zeilen unterscheidet sich insbesondere die 625. Zeile vom in Fig. 1 dargestellten Aufbau. Sie ist vollständig der Übertragung duobinär codierter Daten vorbehalten. Im folgenden werden die im Abschnitt 5 vorliegenden Signale als Datenteil und die Signale in den Abschnitten 6, 7 und 8 als Bildteil bezeichnet.

Fig. 2 zeigt das bei dem erfindungsgemäßen System verwendete digitale Signal. Dabei liegen die Farbart-und die Leuchtdichteinformation als digitale Signale vor mit einer 8-Bit-Quantisierung. Diese Quantisierung erfordert eine hohe Bitrate, was im einzelnen noch ausgeführt wird.

Wegen dieser hohen Bitrate erfordert eine Übertragung der gleichen Informationsmenge für die Synchronisierung, die Audiokanäle und die Daten wie beim MAC-Signal einen wesentlich kürzeren Zeitabschnitt 9. Deshalb kann bei Beibehaltung der Zeilendauer von 64 μs der Zeitabschnitt für die Videoinformation gegenüber dem MAC-Signal gedehnt werden. Eine 8-Bit-Quantisierung erlaubt eine Gesamtbitrate von weniger als 140 Mbit/s und somit eine Übertragung innerhalb der vierten PCM-Hierarchiestufe der Deutschen Bundespost. In den Zeitabschnitten 10, 11, 12 werden die im Bildteil des Multiplexsignals nach Fig. 1 vorliegenden Informationen in digitaler Form übertragen.

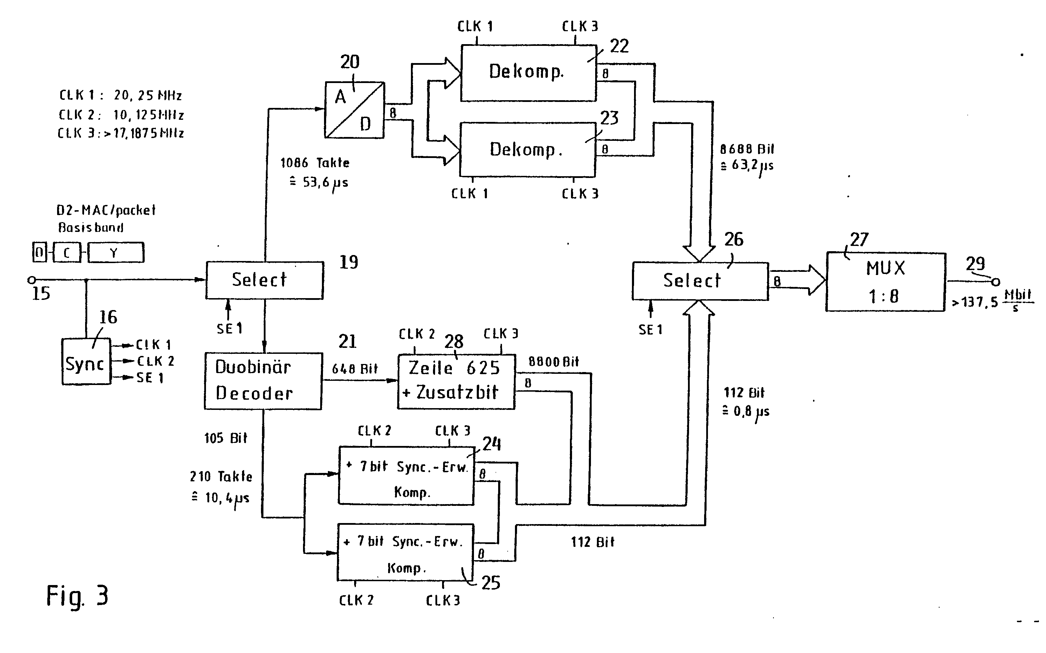

Dem Coder nach Fig. 3 wird bei 15 ein D2-MAC/Paket-Signal zugeführt. In einer im Prinzip bekannten Schaltung 16 werden aus dem Datenteil des Multiplexsignals die Taktsignale CLK1 (20, 25 MHz) und CLK2 (10,125 MHz) gewonnen. Außerdem wird in der Schaltung 16 aus dem in dem Datenteil des D2-MAC/Paket-Signals enthaltenen Synchroniersignal ein Select-Impuls SE1 abgeleitet. Der Select-Impuls SE1 steuert eine Auswahlschaltung 19, mit deren Hilfe der Bildteil des D2-MAC/Paket-Signals einem Analog/Digital-Wandler 20 und der Datenteil einem Duobinär-Decoder 21 zugefuhrt wird.

Innerhalb des Analog/Digital-Wandlers 20 wird der Bildteil bestehend aus dem Bezugspegel, dem Farbartsignal C und dem Leuchtdichtesignal Y mit dem Takt CLK1, also mit 20,25 MHz abgetastet und mit 8 Bit quantisiert. Die Ausgangssignale des Analog/Digital-Wandlers 20 werden dann einer Schaltung zur Dekompression zugeführt, welche im wesentlichen aus zwei jeweils 8 Bit breiten Schreib/Lese-Speichern (RAM oder CCD) 22, 23 besteht. Die Schreib/Lese-Speicher 22, 23 weisen jeweils die Kapazität einer Fernsehzeile auf. Die Dekompression erfolgt nun dadurch, daß die digitalen Signale mit dem Takt CLK1 in die Speicher eingelesen werden und mit einem Takt CLK3, dessen Frequenz geringer ist, aus den Speichern ausgelesen werden. Dazu werden den Schreib-Lese-Speichern die Taktsignale CLK1 und CLK3 zugeführt.

Die Schreib- und Lesespeicher 22, 23 werden derart gesteuert, daß während einer ersten Zeilenperiode beginnend mit dem Zeitabschnitt 1 der digitalisierte Bildteil einer Zeile mit dem Takt CLK1 in den Speicher 22 eingeschrieben wird, daß während einer zweiten Zeilenperiode die in der ersten Zeilenperiode in den Speicher 22 eingeschriebenen Daten mit dem Takt CLK3 ausgelesen werden und beginnend mit dem Zeitabschnitt 1 (Fig. 1) in den Speicher 23 der Bildteil der nächsten Zeile mit dem Taktsignal CLK1 eingeschrieben wird. In der darauffolgenden Zeilenperiode werden Daten aus dem Speicher 23 ausgelesen und weitere Daten in den Speicher 22 eingelesen.

Das Taktsignal CLK3 kann einerseits vom Systemtakt der D2-MAC/Paket-Signale abgeleitet werden. Beträgt die Frequenz von CLK3 17,1875 MHz, so werden innerhalb von 63,2 μs 8688 Bit je Zeile aus den Dekompressionsschaltungen 22, 23 ausgelesen, welche dann durch 112 Bit je Zeile in der Schaltung 26 zu 8800 Bit je Zeile ergänzt werden.

Das Taktsignal CLK3 kann jedoch auch vom Systemtakt des Übertragungsnetzes für die digitalen Signale abgeleitet werden. In diesem Fall kann die Frequenz von CLK3 größer als 17,1875 MHz sein, wobei dann bei Beibehaltung der Zeilenfrequenz zur Auffüllung jeweils einer Zeile noch sogenannte Stopfbits einzufügen wären.

Die duobinär codierten Signale des Zeitabschnitts 5 des D2-MAC/Paket-Signals werden von der Schaltung 19 einem an sich bekannten Duobinär-Decoder 21 zugeführt, wo sie in binär codierte Signale umgewandelt werden. Die 105 Bit, welche das D2-MAC/Paket-Signal im Zeitabschnitt 5 aufweist, werden in den zeilenweise abwechselnd arbeitenden Schaltungen 24 und 25 um 7 Bit auf ein Vielfaches von acht ergänzt und auf einen Zeitraum von 0,8 μs komprimiert. Dazu werden die Signale mit dem Takt CLK2 von 10,125 MHz in die Schaltungen 24 und 25 eingeschrieben und mit CLK3 ausgelesen.

Die im D2-MAC/Paket-Signal in der 625. Zeile vorhandenen 648 Bit werden in einer Schaltung 28 in gleicher Weise komprimiert. Der durch diese Kompression frei werdende Zeitabschnitt der 625. Zeile wird aufgefüllt und kann zur Übertragung von 203,6 kbit/s d. h. von drei 64-kbit/s-Kanälen genutzt werden, so daß am Ausgang der Schaltung 28 während der 625. Zeile ebenfalls 8800 Bit zur Verfügung stehen. Diese werden, ebenso wie die Ausgangssignale der Schaltungen 24 und 25, zur Schaltung 26 geführt und entsprechend Fig. 2 mit den Daten aus Schaltung 22 bzw. 23 zusammengefügt. Auf die Schaltung 26 folgt ein als Parallel-Serien-Wandler arbeitender Multiplexer 27, an dessen Ausgang 29 dann ein digitales Signal zur Verfügung steht, welches sich für die Übertragung über Glasfasern in vorteilhafter Weise eignet.

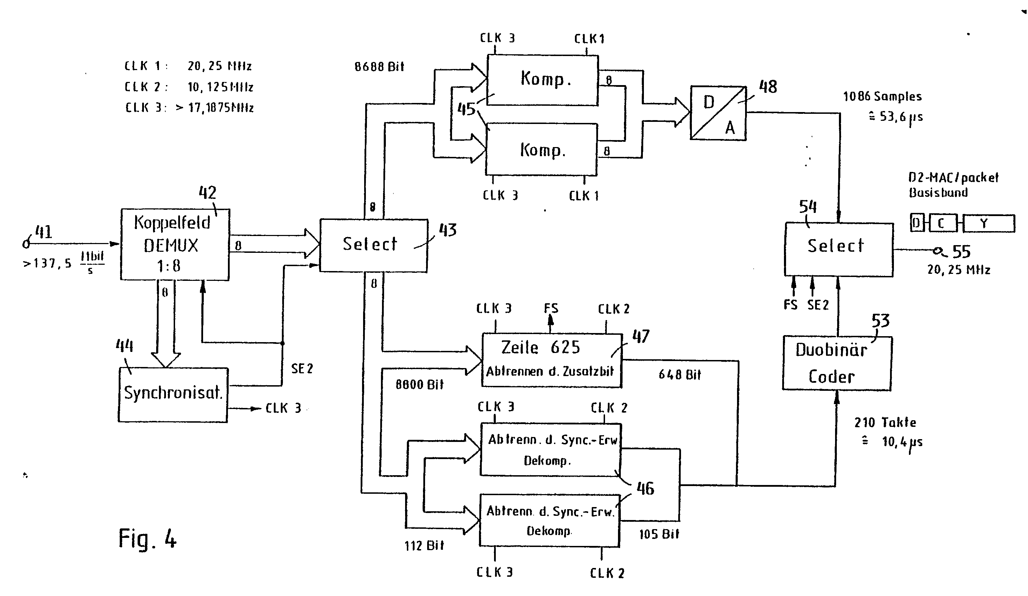

Fig. 4 zeigt ein Blockschaltbild eines Decoders, welcher ein Signal gemäß der Erfindung, welches beispielsweise mit einem Coder nach Fig. 3 abgeleitet wurde, in ein D2-MAC/Paket-Signal umwandelt. Das dem Eingang 41 der Anordnung nach Fig. 4 zugeführte digitale Signal gelangt zunächst in ein Koppelfeld 42, welches einen Serien-Parallel-Wandler umfaßt. Das 8 Bit breite Ausgangssignal des Koppelfeldes wird einerseits einer Auswahlschaltung 43 und andererseits einer Synchronisierschaltung 44 zugeführt. Die Synchronisierschaltung leitet aus dem bei 41 zugeführten seriellen Datenfluß das Taktsignal CLK3 ab, erkennt das Synchronwort und steuert durch den Select-Impuls SE2 sowohl den Serien-ParallelWandler als auch die Auswahlschaltung 43. In diesem Zusammenhang sei erwähnt, daß die in Fig. 3 hinzugefügten 7 Bit einerseits den Zweck haben, auch mit der bereits digital vorhandenen Information des D2-MAC/Paket-Signals in einem 8-Bit-Raster zu bleiben, andererseits jedoch auch in vorteilhafter Weise einer Verlängerung des Synchronworts und damit einer besseren Synchronisierbarkeit zu dienen.

Die Auswahlschaltung 43 führt nun den parallelen Datenstrom während des Bildteils einer Zeile (63,2 μs) zur Kompressionsschaltung 45, während des Datenteils einer Zeile (0,8 μs) zur Dekrompressionsschaltung 46 und während der gesamten 625. Zeile zur Schaltung 47. Die Kompressionsschaltung 45 ist in ähnlicher Weise wie die Dekompressionsschaltung bei der Anordnung nach Fig. 3 aufgebaut. Ein wesentlicher Unterschied besteht darin, daß die Signale in die Kompres sionsschaltung 45 mit dem Takt CLK3 eingeschrieben und mit dem Takt CLK1 (20,25 MHz) ausgelesen werden. Die komprimierten digitalen Signale werden dann einem Digital/Analog-Wandler 48 zugeführt, an dessen Ausgang der MAC-Bildteil ansteht.

Die Schaltungen 46 und 47 führen umgekehrte Operationen wie die Schaltungen 24, 25 und 28 bei der Anordnung nach Fig. 3 aus. Im einzelnen trennt die Schaltung 46 die Erweiterung des Synchronwortes um 7 Bit wieder ab und dekomprimiert die verbleibenden 105 Bit des D2-MAC/Paket-Datenbursts auf eine Dauer von 0,4 μs. In der Schaltung 47 werden die 648 Bit der 625. Zeile des D2-MAC/Paket-Signals von den Zusatzbits getrennt und dekomprimiert. Gleichfalls wird in dieser Schaltung der Rahmensynchronimpuls FS gewonnen. Mit Hilfe eines an sich bekannten Duobinär-Coders 53 werden die digitalen Signalanteile des D2-MAC/Paket-Signals in die normgerechte duobinär codierte Form gebracht. Mit Hilfe einer Auswahlschaltung 54 werden der Bildteil und der Datenteil des D2-MAC/Paket-Signals zusammengefaßt und dem Ausgang 55 der Anordnung nach Fig. 4 zugeführt.

Die in den Figuren 3 und 4 dargestellten Anordnungen können mit geringen Abwandlungen auch für die Umwandlung von C-MAC/Paket-Signalen und D-MAC/Paket-Signalen verwendet werden. Da bei diesen Signalen im Datenteil einer jeden Zeile 206 Bit übertragen werden, ergeben sich bei der Anwendung des erfindungsgemäßen Systems auf C-MAC/Paket-Signale und D-MAC/Paket-Signale andere Synchronworterweiterungen sowie andere Kompressions- bzw. Dekompressionsverhältnisse.

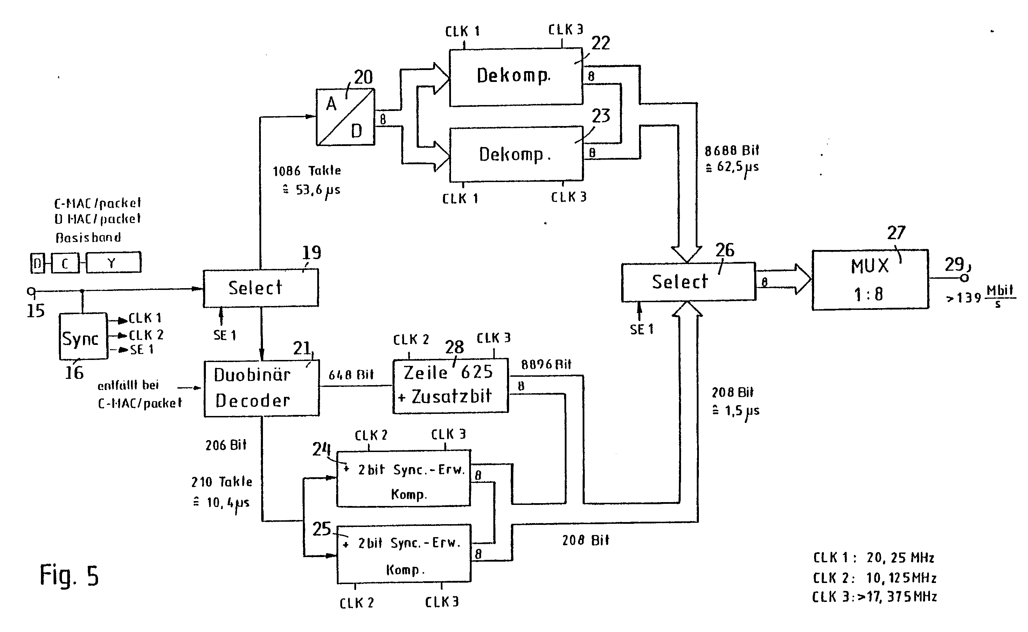

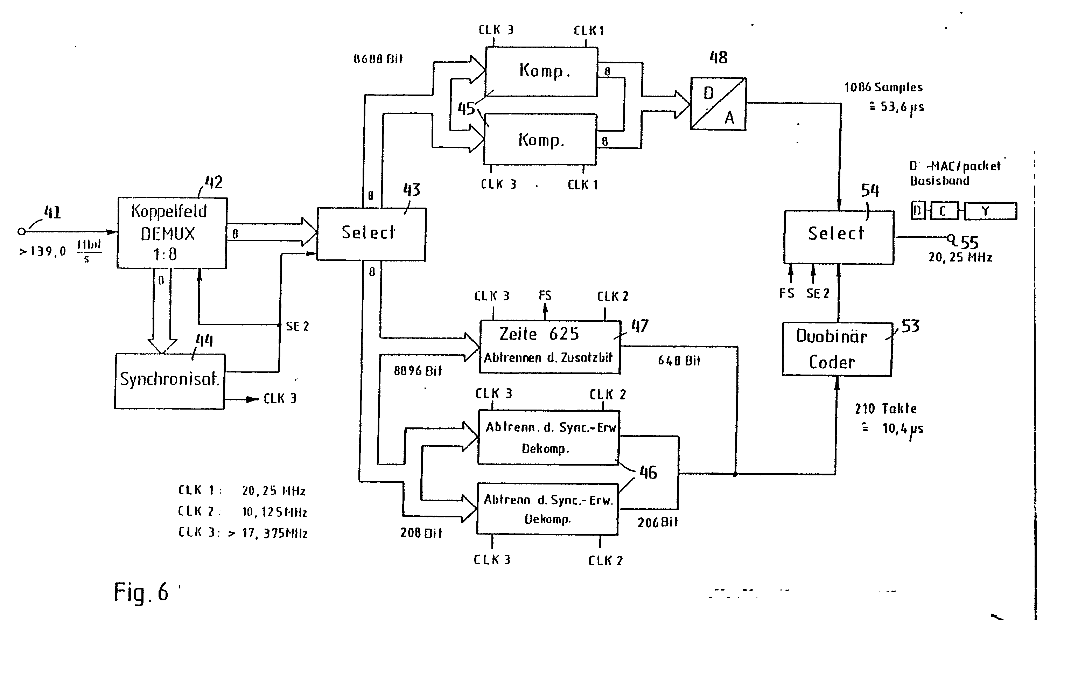

In den Figuren 5 und 6 sind daher die gleichen Blockschaltbilder wie in den Figuren 3 und 4 dargestellt, wobei zur Verdeutlichung der Datenflüsse die Bit-Werte für das C-MAC/Paket-Signal und das D-MAC/Paket-Signal eingetragen sind.

Die Frequenz des Taktsignals CLK3 beträgt wegen der Beibehaltung der Zeilenfrequenz mindestens 17,375 MHz. Bei diesem Wert nehmen die dekomprimierten digitalen Videosignale eine Dauer von 62,5 μs ein, so daß für die Synchronisier-, Audio- und Datenbits 1,5 μs verbleiben. Die Bitrate der Ausgangssignale beträgt dann 139 Mbit/s. Im Falle des C-MAC/Paket-Signals entfällt der Duobinär-Decoder 21 (Fig. 5) und der Duobinär-Coder 53 (Fig. 6).

Die jeweils zu Beginn der 1. bis 624. Zeile übertragenen 206 Datenbits werden in den Schaltungen 24 und 25 um 2 Bit ergänzt, um ein ganzzahliges Vielfaches von 8 zu erhalten, was den üblichen Strukturen von Rechnern und digitalen Bauelementen entgegenkommt. In der 625. Zeile werden 648 Datenbits der Schaltung 28 zugeführt, wo sie durch zusätzliche Bits zu einem Signal mit 8896 Bit je Zeile ergänzt werden. Der gesamte Datenfluß am Ausgang 29 beträgt dann 139 Mbit/s bei einer Frequenz von CLK3 von 17,375 MHz.

Die Einfügung von zusätzlichen Bits in der 625. Zeile ergibt auch hier die Möglichkeit, weitere Informationen zu übertragen. Die Kapazität dieses zusätzlichen Datenkanals beträgt 206 kbit/s. Es können also mit der zusätzlichen Kapazität ebenfalls drei 64-kbit/s-Kanäle zur Verfügung gestellt werden.

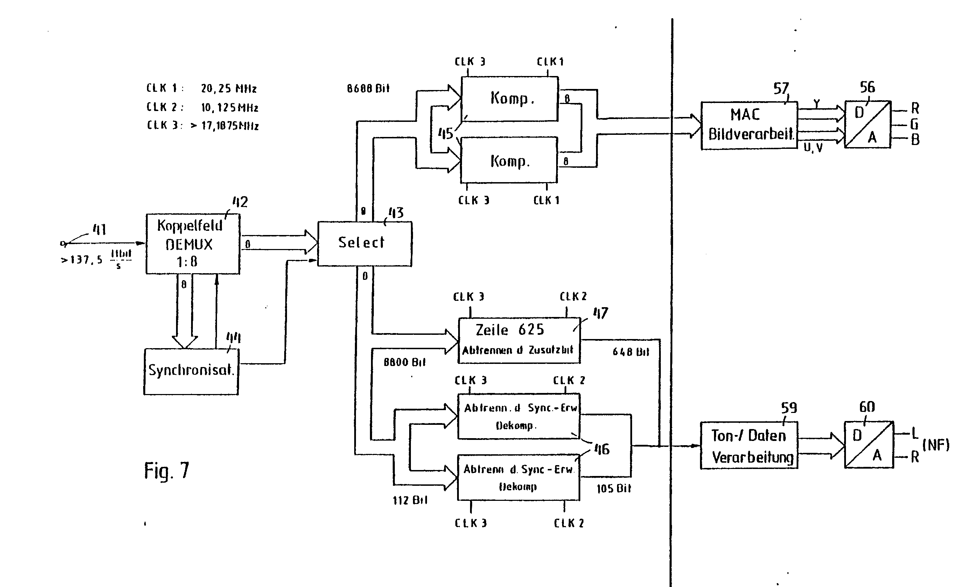

Bei der in Fig. 7 dargestellten Anordnung entsprechen das Koppelfeld, die Auswahlschaltung 43, die Kompressionsschaltung 45 und die Schaltungen 46 und 47 denjenigen, welche bereits im Zusammenhang mit Fig. 4 erläutert wurden. Im Gegensatz zu der Anordnung nach Fig. 4 werden jedoch die komprimierten digitalen Signale nicht in analoge umgewandelt, sondern in eine digitale Bildverarbeitungsschaltung 57 eines D2-MAC-Decoders geleitet, wo die Signale auf die volle Zeilenlänge expandiert und in einem eine Matrix umfassenden Digital/Analog-Wandler 58 in Farbwertsignale R, G, B umgewandelt werden.

Die Ausgangssignale der Schaltungen 46 und 47 werden der digitalen Ton- und Datenverarbeitungsschaltung 59 eines Digital/Analog-Wandlers zugeführt, wo digitale Tonsignale entstehen, die im Digital/Analog-Wandler 60 zu den beiden Tonsignalen L und R umgewandelt werden. Die Schaltungen 57 bis 60 können als Teile eines vollständigen D2-MAC-Decoders in oder in Verbindung mit einem Fernseher angeordnet sein. Durch die Zuschaltung der erfindungsgemäßen Empfangsanordnung werden sowohl ein Empfang von D2-MAC-Signalen als auch ein Empfang von Signalen nach dem erfindungsgemäßen System, beispielsweise über Glasfasern, ermöglicht.

Gegebenenfalls können jedoch nur die in Fig. 7 dargestellten Baugruppen ohne die Analogschaltungen des D2-MAC-Decoders verwendet werden, so daß sich ein spezielles "Glasfaserfernsehgerät" ergibt - abgesehen von den herkömmlichen HF-Empfangsmöglichkeiten.

Die Erfindung ist nicht auf die Ausführungsbeispiele beschränkt und kann im Rahmen des Fachmännischen auch in anderer Weise verwirklicht werden. So können beispielsweise die Videosignale für geringere Qualitätsanforderungen mit einer Quantisierung von 7 Bit anstelle von 8 Bit übertragen werden, in diesem Fall würden die Daten auch zu 7 Bit organisiert werden, eine Synchronworterweiterung könnte entfallen. Die gesamte Übertragungsrate ergibt sich für D2-MAC/Paket dabei zu 120,2454 Mbit/s. Mit Hilfe von in der Digitaltechnik an sich bekannten Mitteln kann der Datenstrom auch aufgeteilt werden, so daß mehrere Kanäle mit jeweils geringerer Übertragungskapazität verwendet werden. Dadurch ist beispielsweise die Erfindung auch für die Übertragung mit Hilfe von Glasfaserleitungen mit Lichtdioden anstelle von Laserdioden geeignet.

Ferner ist es in der digitalen Schaltungstechnik möglich, Funktionen von Schaltungen, die in den Figuren im Sinne einer besseren Verständlichkeit als separate Blöcke dargestellt sind, auf andere Schaltungen zu übertragen. So können beispielsweise die Funktionen der Auswahlschaltungen (19, 26, 43, 54) durch entsprechende Ausbildung der Eingänge bzw. der Ausgänge von den mit ihnen zusammenwirkenden Schaltungen übernommen werden.

**Ansprüche**

1. Übertragungssystem für Fernsehinformationen, bestehend aus einem Sender und mindestens einem Empfänger, wobei die Fernsehinformationen aus mit Zeilenfrequenz nacheinander übertragenen Bildpunktsignalen und zugehörigen Tonsignalen bestehen, dadurch gekennzeichnet, daß innerhalb vorgegebener Zeitabschnitte einer Zeilenperiode nacheinander digitale Audiosignale und Synchronisiersignale, digitale Farbartsignale und darauffolgend digitale Leuchtdichtesignale übertragen werden, und daß innerhalb einer Zeilenperiode 112 Bit für Synchronisiersignale, Audiosignale und weitere Daten und 1 086 x 8 Bit für Farbart- und Leuchtdichtesignal vorgesehen sind.

2. Übertragungssystem für Fernsehinformationen, bestehend aus einem Sender und mindestens einem Empfänger, wobei die Fernsehinformationen aus mit Zeilenfrequenz nacheinander übertragenen Bildpunktsignalen und zugehörigen Tonsignalen bestehen, dadurch gekennzeichnet, daß innerhalb vorgegebener Zeitabschnitte einer Zeilenperiode nacheinander digitale Audiosignale und Synchronisiersignale, digitale Farbartsignale und darauffolgend digitale Leuchtdichtesignale übertragen werden, und daß innerhalb einer Zeilenperiode 105 Bit für Synchronisiersignale, Audiosignale und weitere Daten und 1 086 x 7 Bit für Farbart- und Leuchtdichtesignal vorgesehen sind.

3. Übertragungssystem für Fernsehinformationen nach Anspruch 1 oder 2, dadurch gekennzeichnet, daß bei der Ableitung der digitalen Bildteilsignale und der weiteren digitalen Signale aus einem Multiplexsignal, welches nacheinander analoge Farbartsignale und Leuchtdichtesignale sowie Synchronisier- und Audio- und Zusatzdatensignale umfaßt, zur Übertragung die den Bildinformationen entsprechenden digitalen Signale mit einem anderen Taktsignal (CLK1) in Zwischenspeicher eingelesen werden als die den anderen Informationen ensprechenden digitalen Signale (Taktsignal CLK2) und daß die Zwischenspeicher mit einem von den schon genannten abweichenden aber gleichen Taktsignal (CLK3) ausgelesen werden.

4. Übertragungssystem für Fernsehinformationen nach Anspruch 1 oder 2, dadurch gekennzeichnet, daß bei der Rückgewinnung des Multiplexsignals aus den empfangenen digitalen Signalen alle digitalen Informationen mit dem gleichen Taktsignal (CLK3) in Zwischenspeicher eingelesen werden und die digitalen Bildinformationen mit einem anderen Taktsignal (CLK1) aus dem Zwischenspeicher ausgelesen werden als die anderen Informationen (Taktsignal CLK2).

5. Übertragungssystem für Fernsehinformationen nach Anspruch 3 oder 4, dadurch gekennzeichnet, daß das Taktsignal für das Auslesen der Zwischenspeicher zur Übertragung und für das Einlesen in die Zwischenspeicher bei Empfang mindestens 17,1875 MHz beträgt und aus dem ursprünglichen Multiplexsignal abgeleitet ist.

6. Anordnung zum Empfangen in einem Übertragungssystem für Fernsehinformationen nach Anspruch 1 oder 2, dadurch gekennzeichnet, daß die digitalen Signale über ein Koppelfeld (42) einer ersten Auswahlschaltung (43) und einer Synchronisierschaltung (44) zugeführt sind, daß ein erster Ausgang der ersten Auswahlschaltung (43), welche von der Synchronisierschaltung (44) steuerbar ist, über eine Kompressionsschaltung (45) und einen Digital-/Analog-Wandler (48) mit einem ersten Eingang einer zweiten Auswahlschaltung (54) verbunden is, und daß ein zweiter Ausgang der ersten Auswahlschaltung (43) über eine Dekompressionsschaltung (46) mit einem zweiten Eingang der zweiten Auswahlschaltung (54) verbunden ist.

7. Anordnung nach Anspruch 6,
dadurch gekennzeichnet,
daß zwischen der Dekompressionsschaltung (46) und einem zweiten Eingang der zweiten Answahlschaltung (54) ein Duobinär-Coder (53) vorgesehen ist.

## Claims

1. Transmission system for television information items, consisting of a transmitter and at least one receiver, in which system the television information items consist of picture element signals transmitted successively at line rate, and associated audio signals, characterised in that within predetermined time intervals of one line period, digital audio signals and synchronisation signals, digital chrominance signals and subsequent digital luminance signals are successively transmitted, and in that within one line period 112 bits are provided for synchronisation signals, audio signals and further data and 1086 x 8 bits are provided for chrominance and luminance signal.

2. Transmission system for television information items, consisting of a transmitter and at least one receiver, in which system the television information items consist of picture element signals transmitted successively at line rate, and associated audio signals, characterised in that within predetermined time intervals of one line period, digital audio signals and synchronisation signals, digital chrominance signals and subsequent digital luminance signals are successively transmitted, and in that within one line period 105 bits are provided for synchronisation signals, audio signals and further data and 1086 x 7 bits are provided for chrominance and luminance signal.

3. Transmission system for television information items according to Claim 1 or 2, characterised in that during the extraction of the digital image section signals and of the further digital signals from a multiplex signal, which successively comprises analogue chrominance signals and luminance signals and synchronisation and audio and additional-data signals, the digital signals corresponding to image information items are entered into temporary memories, for the purpose of transmission, by means of a different clock signal (CLK1) than the digital signals corresponding to the other information items (clock signal CLK2), and in that the temporary memories are read out with a clock signal (CLK3) deviating from that already mentioned but identical.

4. Transmission system for television information items according to Claim 1 or 2, characterised in that during the recovery of the multiplex signal from the received digital signals, all digital information items are entered into temporary memories with the same clock signal (CLK3) and the digital image information items are read out of the temporary memory with a different clock signal (CLK1) than the other information items (clock signal CLK2).

5. Transmission system for television information items according to Claim 3 or 4, characterised in that the clock signal for reading out the temporary memories for transmission and for entering into the temporary memories during reception is at least 17.1875 MHz and is extracted from the original multiplex signal.

6. Arrangement for the reception in a transmission system for television information items according to Claim 1 or 2, characterised in that the digital signals are supplied via a switching matrix (42) to a first selection circuit (43) and a synchronisation circuit (44), in that a first output of the first selection circuit (43), which can be controlled by the synchronisation circuit (44), is connected via a compression circuit (45) and a digital/analogue converter (48) to a first input of a second selection circuit (54), and in that a second output of the first selection circuit (43) is connected via a decompression circuit (46) to a second input of the second selection circuit (54).

7. Arrangement according to Claim 6, characterised in that between the decompression circuit (46) and a second input of the second selection circuit (54), a duobinary encoder (53) is provided.

## Revendications

1. Système de transmission d'informations de télévision, comprenant un émetteur et au moins un récepteur, les infornations de télévision étant formées de signaux de points image et transmis successivement à la fréquence de ligne et de signaux son correspondants, système caractérisé en ce que :

à l'intérieur d'un intervalle de temps prédéterminé d'une période de ligne, on transmet successivement les signaux audio numériques et les signaux de synchronisation, les signaux numériques de couleur puis les signaux numériques de luminosité et à l'intérieur d'une période de bit de 112 bits sont disponibles pour les signaux de synchronisation, les signaux audio et d'autres données et 1086 x 8 bits sont prévues pour le signal de couleur et le signal de luminosité.

2. Système de transmission d'information de télévision comprenant un émetteur et au moins un récepteur, les informations de télévision se composant de signaux de points image transmis successivement à la fréquence de ligne et de signaux son, associés,

système caractérisé en ce qu'à l'intérieur de segments de temps prédéterminés d'une période de ligne, on transmet successivement des signaux audio et des signaux de synchronisation, des signaux de couleur numériques et des signaux numériques de luminosité et en ce qu'à l'intérieur d'une période de ligne, on a prévu 105 bits pour les signaux de synchronisation les signaux audio et d'autres données et 1086 x 7 bits pour le signal de couleur et le signal de luminosité.

3. Système de transmission d'informations de télévision selon la revendication 1 ou 2, caractérisé en ce qu'en dérivant les signaux de partie image numériques et les autres signaux numériques à partir d'un signal multiplexé qui comprend successivement des signaux de couleur et de luminosité, analogiques ainsi que des signaux de synchronisation et des signaux audio ainsi que des signaux de données supplémentaires pour la transmission, on inscrit des signaux numériques correspondant aux informations d'image avec un autre signal d'horloge (CLKI) dans une mémoire intermédiaire, signal d'horloge différent des signaux numériques correspondant aux autres informations (signal d'horloge CLK2) et en ce qu'on lit dans les mémoires intermédiaires avec un signal d'horloge (CLK3) analogue mais différent de ceux déjà indiqués.

4. Système de transmission d'informations de télévision selon la revendication 1 ou 2, caractérisé en ce qu'à la récupération du signal de multiplexage, on lit dans les signaux numériques reçus, toutes les informations numériques avec le même signal de cadence (CLK3) pour les inscrire dans la mémoire intermédiaire et on lit les informations d'image numériques avec un autre signal de cadence (CLK1) de la mémoire intermédiaire, signal de cadence différent de celui des autres informations (signal de cadence CLK2).

5. Système de transmission d'informations de télévision selon la revendication 3 ou 4, caractérisé en ce que :

le signal d'horloge de lecture de la mémoire intermédiaire pour la transmission et d'inscription de la mémoire intermédiaire à la réception correspond à au moins 17,1875 MHz et dérivé du signal initial de multiplexage.

6. Installation pour la réception d'informations de télévision dans un système de transmission selon les revendications 1 et 2, caractérisée en ce que les signaux numériques sont appliqués par un champ de couplage (42) d'un premier circuit de sélection (43) et d'un circuit de synchronisation (44) et en ce qu'une première sortie du premier circuit de sélection (43) qui est commandée à partir du circuit de synchronisation (44), est reliée par un circuit de compression (45) et un convertisseur numérique/analogique à une première entrée d'un second circuit de sélection (54) et en ce qu'une seconde sortie du premier circuit de sélection (43) est reliée par un circuit de décompression (46) à une seconde entrée du second circuit de sélection (54).

7. Installation selon la revendication 6, caractérisée par un codeur duobinaire (53) prévu entre le circuit de décompression (46) et une seconde entrée du second circuit de sélection (54).

EP 0 226 802 B1

0.4

0.4

0.5

Chrominanz
U/V
(1,85 MHz)

0.5

0.5

Luminanz
Y
( 5,6 MHz )

0.5

5   1  6  2        7         3        8      4

**Fig. 1**

9  10         11                        12

**Fig. 2**

Fig. 3

CLK 1 : 20,25 MHz
CLK 2 : 10,125 MHz
CLK 3 : > 17,1875 MHz

CLK 1    CLK 3
20        22
A / D      Dekomp.
           8
           23
           Dekomp.
           8
CLK 1    CLK 3

8688 Bit
≙ 63,2 μs

1086 Takte
≙ 53,6 μs

D2-MAC/packet
Basisband
□ C   Y

15
16
Sync → CLK 1
       → CLK 2
       → SE 1

19
Select
SE 1

21
Duobinär
Decoder
648 Bit

105 Bit

210 Takte
≙ 10,4 μs

CLK 2   28   CLK 3
Zeile 625
+ Zusatzbit        8800 Bit
                   8

CLK 2    CLK 3
24
+ 7 bit Sync.-Erw.
Komp.              8

+ 7 bit Sync.-Erw.
Komp.              8
25
CLK 2    CLK 3

112 Bit

26
Select
SE 1

112 Bit
≙ 0,8 μs

27
MUX
1:8

29
> 137,5 Mbit/s

EP 0 226 802 B1

9

Fig. 4

CLK 1: 20,25 MHz
CLK 2: 10,125 MHz
CLK 3: > 17,1875 MHz

EP 0 226 802 B1

Fig. 5

CLK 1 : 20,25 MHz
CLK 2 : 10,125 MHz
CLK 3 : >17,375 MHz

EP 0 226 802 B1

Fig. 6

CLK 1 : 20,25 MHz
CLK 2 : 10,125 MHz
CLK 3 : > 17,375 MHz

EP 0 226 802 B1

CLK 1 : 20,25 MHz
CLK 2 : 10,125 MHz
CLK 3 : > 17,1875 MHz

CLK 3     CLK 1

8688 Bit

Komp.     8

45

Komp.     8

CLK 3     CLK 1

57     56

MAC
Bildverarbeit.     Y     D / A     R
                   U,V            G
                                  B

41
>137,5 Mbit/s

Koppelfeld
DEMUX
1:8     42     8     Select     43     8

8

Synchronisat.     44

Zeile 625     47
Abtrennen d. Zusatzbit

CLK 3     CLK 2

8800 Bit     648 Bit

Abtrenn. d. Sync.-Erw.
Dekomp.
CLK 3     CLK 2     46

Abtrenn. d. Sync.-Erw.
Dekomp.

112 Bit     105 Bit

CLK 3     CLK 2

59     60

Ton-/ Daten
Verarbeitung     D / A     L
                          R     (NF)

Fig. 7